Europäisches Patentamt

(19) European Patent Office

Office européen des brevets

(11) Publication number: **0 248 572**
**B1**

# EUROPEAN PATENT SPECIFICATION

(45) Date of publication of the patent specification:
22.11.90

(51) Int. Cl.⁵: **F16C 33/78**

(21) Application number: 87304572.8

(22) Date of filing: 22.05.87

(54) **A bearing.**

(30) Priority: 24.05.86 JP 119602/86

(43) Date of publication of application:
09.12.87 Bulletin 87/50

(45) Publication of the grant of the patent:
22.11.90 Bulletin 90/47

(84) Designated Contracting States:
DE FR GB

(56) References cited:
EP-A- 0 065 887
BE-A- 549 975
CH-A- 231 311
DE-A- 2 011 824
FR-A- 1 498 454
FR-A- 2 006 017
GB-A- 770 716
GB-A- 2 110 773
US-A- 2 856 208
US-A- 3 792 912

AUTOMOBILE ENGINEER, vol. 46, no. 3, March 1956,
page 117

(73) Proprietor: **KOYO SEIKO CO., LTD., 2,
Unagidaninishinocho Minami-Ku, Osaka-shi
Osaka 542(JP)**

(72) Inventor: **Takeuchi, Masamichi, c/o Koyo Seiko Co.,
Ltd. 2 Unagidanishino-cho, Minami-ku Osaka-shi
Osaka-fu(JP)**
Inventor: **Nakajima, Junichi, c/o Koyo Seiko Co.,
Ltd. 2 Unagidanishino-cho, Minami-ku Osaka-shi
Osaka-fu(JP)**

(74) Representative: **Ellis, Edward Lovell et al, MEWBURN
ELLIS & CO. 2/3 Cursitor Street, London EC4A 1BQ(GB)**

## Description

The present invention relates to a bearing for use in high speed operation under high-temperature and, mud and water splashing conditions.

Bearings for use in automobiles, such as, for example, propeller-shaft support centre bearings, drive-shaft centre bearings, wheel bearings, alternator bearings, and bearings for an auxiliary device, are required to withstand high-speed and high-temperature conditions and also to have high anti-mud and sealing properties.

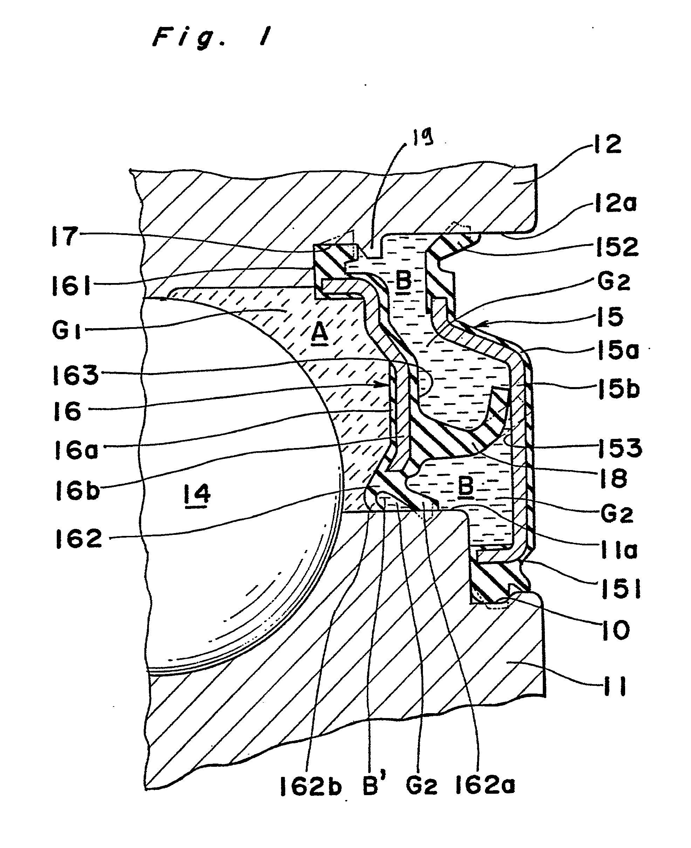

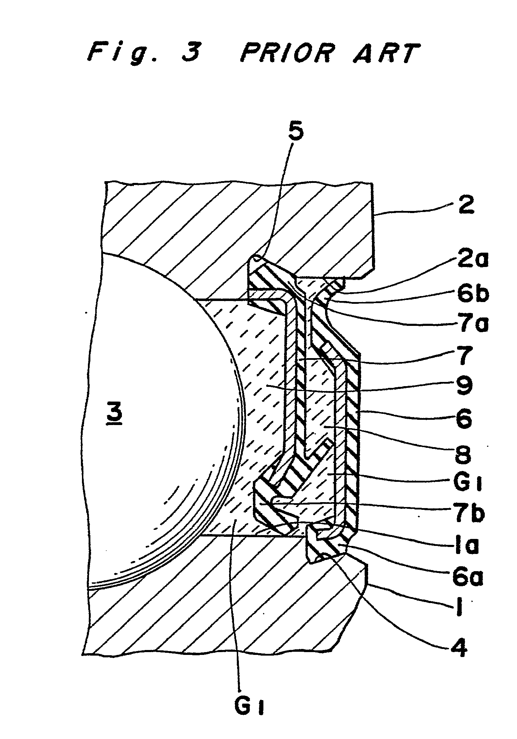

One typical prior art bearing of this kind is shown in Fig. 3 which corresponds to Fig. 1 of Japanese Utility Model Application Laid-open Publication No. 5 929 421. Such bearings comprise a plurality of balls 3 arranged in circumferentially spaced apart relation between an inner ring 1 and an outer ring 2, a ring shaped outer seal member 6 having an inner circumferential portion 6a fitted in a support groove 4 of the inner ring 1 and an outer circumferential portion 6b held in slide contact with an inner periphery 2a of the outer ring 2, and a ring shaped inner seal member 7 having an outer circumferential portion 7a fitted in a support groove 5 of the outer ring 2 and an inner circumferential portion 7b held in slide contact with an outer periphery 1a of the inner ring 1. A kind of grease $G_1$, e.g. a heat-resistant grease, is contained in a space 8 defined between the outer seal member 6 and the inner seal member 7 and also in a space 9 defined in cooperation with the balls 3, the inner seal member 7 and the inner and outer rings 1,2.

Because of the heat resistant grease $G_1$ contained in the space 8 between the outer seal member 6 and the inner seal member 7 and in the space 9 inward of the inner seal member 7, however, such conventional bearing has a drawback that it is not well resistant to water and corrosion; if water, mud, or the like from an external source deposits on the slide contact portion between the outer circumferential portion 6b of the outer seal member 6 and the inner periphery 2a of the outer ring 2, pitting is likely to develop on the slide contact portion, the outer circumferential portion 6b of the outer seal member 6 being thus deteriorated in sealing properties, which fact in turn leads to deterioration of the inner seal member 7 in water resistance.

In the present state of the art, there is no one grease well qualified to meet the heat resistance requirements on one hand and the water-resistant and corrosion-preventive requirements on the other hand.

The use of a heat resistant grease in the space occupied by the rolling members and a water resistant and corrosion preventative grease in the space between the seal members is disclosed in EP-A 65 887, Swiss Patent Specification No. 231, 311 and an article in "Automobile Engineer" 46(1956.03)3.

It is an object of the present invention to further improve the types of bearings described above in order to prevent the ingress of water into the bearing when the above two types of greases are used.

According to the present invention there is provided a bearing including:
inner and outer raceway rings positioned radially one inside the other;
a plurality of rolling members positioned between the outer and inner raceway rings and spaced a distance from each other in a circumferential direction of the outer and inner raceway rings;
axially inner and outer seal members sealing the outer and inner raceway rings to each other at one axial side of the rolling members;
the inner seal member having a radially outer circumferential portion made of rubber and fixed to the outer raceway ring and a radially inner circumferential portion made of rubber and held in sliding contact with the inner raceway ring, and
the outer seal member having a radially inner circumferential portion made of rubber and fixed to the inner raceway ring and a radially outer circumferential portion made of rubber and held in sliding contact with the outer raceway ring;
there being a first space defined by the inner seal member, the raceway rings and the rolling members and a second space defined by the inner and outer seal members and the raceway rings,
a first grease having heat resistant properties being contained in the first space;
characterized in that a second grease having water-resistant and corrosion preventative properties being contained in the second space;
and that the inner circumferential portion of the inner seal member is bifurcated so as to have two legs slidingly contacting the inner raceway ring with a space defined by said two legs and said inner raceway ring containing said second grease.

The outer raceway ring may have a flat circumferential surface on an inner periphery thereof with which the radially outer circumferential portion of the outer seal member is held in sliding contact at a position axially inside a position at which the radially inner circumferential portion of the outer seal member is fixed to the inner raceway ring.

Between the contact regions with the outer raceway ring of respectively the radially outer circumferential portion of the inner seal member and the radially outer circumferential portion of the outer seal member, the outer raceway ring may be provided with an axially outward facing surface portion. Also, between the contact regions with the inner raceway ring of respectively the radially inner circumferential portion of the inner seal member and the radially inner circumferential portion of the outer seal member, the inner raceway ring may be provided with an axially outwardly facing surface portion.

Furthermore, between the contact regions with the outer raceway ring of respectively the radially outer circumferential portion of the inner seal member and the radially outer circumferential portion of the outer seal member, the outer raceway ring may be provided with a radially inwardly extending portion.

The present invention will now be described in greater detail by way of example, with reference to the accompanying drawings, wherein:

Fig. 1 is a sectional view of a bearing representing one embodiment of the invention;

Fig. 2 is a sectional view showing another embodiment of the invention; and

Fig. 3 is a sectional view showing a conventional type of bearing.

Before the description of the present invention proceeds, it is to be noted that the like parts are designated by like reference numerals throughout the accompanying drawings.

In Fig. 1, reference numeral 11 designates an inner ring, reference numeral 12 designates an outer ring, reference numeral 14 designates rolling members in the form of balls (only one of which is shown) arranged in circumferentially spaced apart relation between the inner ring 11 and the outer ring 12, and reference numeral 15 is a ring-shaped outer seal member consisting of a rubber portion 15a and a core metal portion 15b. An inner circumferential portion 151 of the rubber portion 15a of the outer seal member 15 is fitted in a support groove 10 in an outer periphery 11a of the inner ring 11, and an outer circumferential portion 152 of the rubber portion 15a is in slide contact with an inner periphery 12a of the outer ring 12. A ring-shaped inner seal member 16 consists of a rubber portion 16a and a core metal portion 16b. An outer circumferential portion 161 of the rubber portion 16a is fitted in a support groove 17 in an inner periphery 12a of the outer ring 12, and a bifurcated inner circumferential portion 162 of the rubber portion 16a is in slide contact with the inner periphery 11a of the inner ring 11. The inner seal member 16, in its outer surface 163, is provided with a projection 18, the front end of which is in slide contact with an inner surface 153 of the outer seal member 15.

A first grease $G_1$ having heat resistant properties is contained in a space A defined inward of the inner seal member 16, and a second grease $G_2$ having high water-resistant and corrosion-preventive properties is contained or applied in a space B defined between the outer seal member 15 and the inner seal member 16 and also in a space B' defined between the bifurcated inner circumferential portion 162 of the inner seal member 16 and the outer periphery 11a of the inner ring 11.

Since the first and second greases $G_1$, $G_2$ having different properties are, respectively, contained or applied in the space A and in the spaces B, B', entry of water, mud, or the like can be effectively prevented by the second $G_2$ and the good lubrication of the balls 14, etc. under high speed and high temperature conditions can be assured by the first grease $G_1$. Even if water or the like enters the spaces B, B' through the slide contact portion between the outer seal member 15 and the outer ring 12, the water-resistant and corrosion-preventive second grease $G_2$ contained in the spaces B, B' provides surface protection of both the slide contact portion of the outer ring 12 and the slide contact portion of the inner ring 11; therefore, pitting can be effectively prevented. Especially the bifurcated inner circumferential portion 162 of the inner seal member 16 provides double protection against entry of water. The water-resistive and corrosion-preventive second grease $G_2$ contained in the portion enclosed by the bifurcated inner circumferential portion 162 prevents pitting in the area between the outer and inner portions 162a and 162b of the bifurcated inner circumferential portion 162.

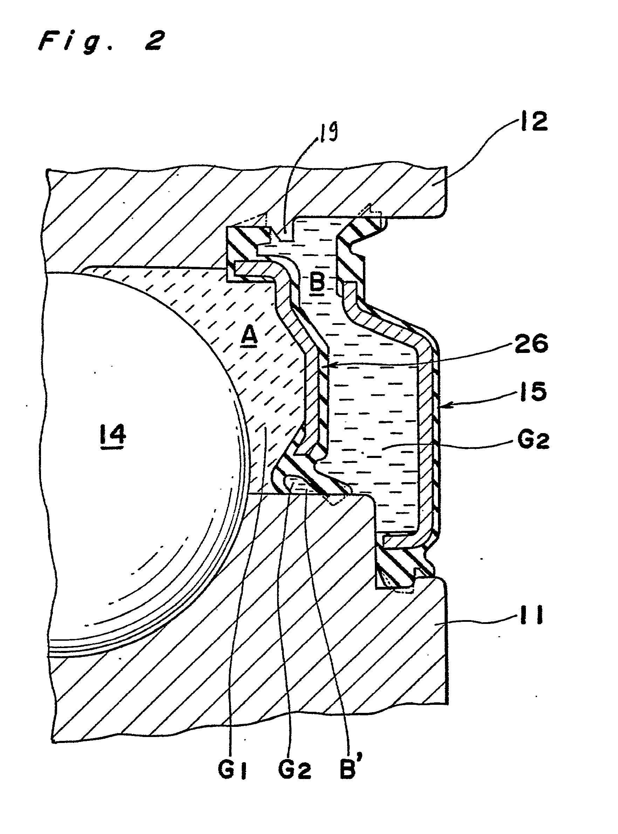

Fig. 2 is a sectional view showing another embodiment of the invention. The bearing of this embodiment comprises an inner seal member 26 which corresponds to the inner seal member 16 of the foregoing embodiment from which the projection 18 is removed. The heat-resistive and corrosion-preventive second grease $G_2$ is contained in the space B between the inner seal member 26 and an outer seal member 15. In other respects, the second embodiment is identical with the first embodiment. Therefore, description is omitted of the other parts thereof which are designated by corresponding reference numerals.

It is to be noted that greases $G_1$, $G_2$ may be contained either closely or loosely in the spaces A and B. The rolling members may be in the form of either balls or rollers.

As may be clearly understood from the foregoing description, the bearing in accordance with the invention comprises a first grease having good heat resistance which is contained in a first space defined inward of an inner seal member, and a second grease having water-resistive and corrosion-preventive properties contained in a second space defind between the inner and outer seal members. Therefore, water, mud, or the like is unlikely to enter the interior, and even if water and the like enter the second space through the clearance between the outer seal member and the outer or inner ring, the second grease contained in the second space protects the respective peripheries of the outer and inner rings against rust development to ensure good performance of the outer and inner seal members over a long period of time. Further, the first grease contained in the space inward of the inner seal member assures satisfactory lubrication of the roll members and races of the inner and outer rings under high speed and high temperature conditions.

Finally, as will be evident from Figs. 1 and 2, an annular projection 19 is provided at the inner periphery of the outer raceway ring 12 between the inner and outer seal members 16 and 15.

Although the present invention has been described in connection with two specific embodiments thereof, many variations and modifications may be made without departing from the scope of the invention as defined in the appended claims.

## Claims

1. A bearing including:
inner and outer raceway rings (11, 12) positioned radially one inside the other;
a plurality of rolling members (14) positioned between the outer and inner raceway rings and spaced a distance from each other in a circumferential direction of the outer and inner raceway rings;

axially inner and outer seal members (16, 15) sealing the outer and inner raceway rings to each other at one axial side of the rolling members (14);

the inner seal member (16) having a radially outer circumferential portion (161) made of rubber and fixed to the outer raceway ring (12) and a radially inner circumferential portion (162) made of rubber and held in sliding contact with the inner raceway ring (11), and

the outer seal member (15) having a radially inner circumferential portion (151) made of rubber and fixed to the inner raceway ring (11) and a radially outer circumferential portion (152) made of rubber and held in sliding contact with the outer raceway ring (12);

there being a first space (A) defined by the inner seal member (16), the raceway rings (11,12) and the rolling members (14) and a second space (B) defined by the inner and outer seal members (16, 15) and the raceway rings (11,12),

a first grease (G1) having heat resistant properties being contained in the first space (A);

characterized in that a second grease (G2) having water-resistant and corrosion preventative properties is contained in the second space (B);

and that the inner circumferential portion (162) of the inner seal member (16) is bifurcated so as to have two legs (16a, 16b) slidingly contacting the inner raceway ring (11) with a space (B¹) defined by said two legs (16a, 162b) and said inner raceway ring (11) containing said second grease (G2).

2. A bearing according to claim 1, characterized in that the outer raceway ring (12) has a flat circumferential surface on an inner periphery thereof (12a) with which the radially outer circumferential portion (152) of the outer seal member (15) is held in sliding contact at a position axially inside a position at which the radially inner circumferential portion (151) of the outer seal member (15) is fixed to the inner raceway ring (11).

3. A bearing according to claim 1, characterized in that between the contact regions with the outer raceway ring (12) of respectively the radially outer circumferential portion (161) of the inner seal member (16) and the radially outer circumferential portion (152) of the outer seal member (15), the outer raceway ring (12) has an axially outwardly facing surface portion and, between the contact regions with the inner raceway ring (11) of respectively the radially inner circumferential portion (162) of the inner seal member (16) and the radially inner circumferential portion (151) of the outer seal member (15), the inner raceway ring (11) has an axially outwardly facing surface portion.

4. A bearing according to claim 1, characterized in that between the contact regions with the outer raceway ring (12) of respectively the radially outer circumferential portion (161) of the inner seal member (16) and the radially outer circumferential portion (152) of the outer seal member (15), the outer raceway ring (12) has a radially inwardly extending projection (19).

## Patentansprüche

1. Lager mit Innen- und Außenlaufringen (11, 12), die radial ineinander positioniert sind;

mehreren Rollelementen (14), die zwischen den Innen- und Außenlaufringen positioniert sind und in Umfangsrichtung der Laufringe zueinander Abstände aufweisen;

axialen Innen- und Außendichtelementen (16, 15), die an einer axialen Seite der Rollelemente (14) die Außen- und Innenlaufringe gegeneinander abdichten;

wobei das Innendichtelement (16) einen radialen äußeren Umfangsteil (161) hat, der aus Gummi besteht und am Außenlaufring (12) befestigt ist, und

einen radialen inneren Umfangsteil (162), der aus Gummi besteht und mit dem Innenlaufring (11) in Gleitkontakt gehalten ist; und

das Außendichtelement (15) einen radialen inneren Umfangsteil (151) hat, der aus Gummi besteht und am Innenlaufring (11) befestigt ist und mit dem Aussenlaufring (12) in Gleitkontakt gehalten ist;

wobei Innendichtelement (16), Laufringe (11, 12) und Rollelemente (14) einen ersten Zwischenraum (A) begrenzen, und Innen- und Außendichtelemente (16, 15) und Laufringe (11, 12) einen zweiten Zwischenraum (B) begrenzen;

im ersten Zwischenraum (A) ein erster Schmierstoff (G1) mit hitzebeständigen Eigenschaften enthalten ist;

dadurch gekennzeichnet, daß ein zweiter Schmierstoff (G2) mit wasserbeständigen und korrosionsverhindernden Eigenschaften im zweiten Zwischenraum (B) enthalten ist; und

daß der innere Umfangsteil (162) des Innendichtelementes (16) gegabelt ist und damit zwei Schenkel (16a, 16b) hat, die mit dem inneren Laufring (11) in Gleitkontakt stehen, wobei ein Zwischenraum (B¹), der von den beiden Schenkeln (16a, 16b) und dem Innenlaufring (11) begrenzt ist, den zweiten Schmierstoff (G2) enthält.

2. Lager nach Anspruch 1, dadurch gekennzeichnet, daß der Außenlaufring (12) an einem Innenumfang eine flache Umfangsfläche (12a) aufweist, mit der der radiale äußere Umfangsteil (152) des Außendichtelementes (15) an einer Position axial innerhalb einer Position an der der radiale innere Umfangsteil (151) am Innenlaufring (11) befestigt ist, in Gleitkontakt gehalten ist.

3. Lager nach Anspruch 1, dadurch gekennzeichnet, daß zwischen den Kontaktbereichen des Außenlaufrings (12) mit jeweils dem radialen, äusseren Umfangsteil (161) des Innendichtelements (16) und dem radialen äußeren Umfangsteil (152) des Außendichtelments (15) der Außenlaufring (12) einen axial nach außen weisenden Oberflächenteil hat, und zwischen den Kontaktbereichen des Innenlaufrings (11) mit jeweils dem radialen inneren Umfangsteil (162) des Innendichtelements (16) und dem radialen inneren Umfangsteils (151) des Außendichtelements (15) der Innenlaufring (11) einen axial nach außen weisenden Oberflächenteil hat.

4. Lager nach Anspruch 1, dadurch gekennzeichnet, daß zwischen den Kontaktbereichen des Außenlaufrings (12) jeweils mit dem radialen, äußeren Umfangsteil (161) des Innendichtelements (16) und dem radialen äußeren Umfangsteil (152) des Außendichtelementes (15) der Außenlaufring (12) einen radial nach innen vorstehenden Vorsprung (19) aufweist.

## Revendications

1. Palier comprenant:
des bagues de roulement interne et externe (11, 12) disposées radialement l'une à l'intérieur de l'autre;
un certain nombre d'éléments de roulement (14) disposés entre les bagues de roulement externe et interne et espacés les uns des autres suivant une circonférence des bagues de roulement externe et interne;
des éléments d'étanchéité interne et externe (16, 15) disposés de façon axiale et qui assurent l'étanchéité entre les bagues de roulement externe et interne au niveau d'une des zones latérales des éléments de roulement (14);
l'élément d'étanchéité interne (16) comprenant une partie circonférencielle radialement externe (161) realisée en caoutchouc et fixée à la bague de roulement externe (12) et une partie circonférencielle radialement interne (162) réalisée en caoutchouc et maintenue en contact glissant sur la bague de roulement interne (11), et
l'élément d'étanchéité externe (15) comprenant une partie circonférencielle radialement interne (151) réalisée en caoutchouc et fixée à la bague de roulement interne (11) et une partie circonférencielle radialement externe (152) réalisée en caoutchouc et maintenue en contact glissant sur la bague de roulement externe (12);
un premier espace (A) défini par l'élément d'étanchéité interne (16), les bagues de roulement (11, 12) et les éléments de roulement (14) et un second espace (B) défini par les éléments d'étanchéité interne et externe (16, 15) et les bagues de roulement (11, 12), une première graisse ($G_1$) présentant des propriétés de résistance à la chaleur étant contenue dans le premier espace (A);
caractérisé en ce qu'une seconde graisse ($G_2$) présentant des propriétés de resistance à l'eau et à la corrosion est contenue dans le second espace (B); et en ce que la partie circonférencielle interne (162) de l'élément d'étanchéité interne (16) est subdivisée en deux branches (16a, 16b) qui sont en contact par glissement avec la bague de roulement interne (11), un espace (B') étant défini par ces deux branches (16a, 16b) et par la bague de roulement interne (11), cet espace contenant la seconde graisse ($G_2$).

2. Palier selon la revendication 1, caractérisé en ce que la bague de roulement externe (12) présente une surface circonférencielle plane sur sa surface périphérique interne (12a) avec laquelle la partie circonférencielle radialement externe (152) de l'élément d'étanchéité externe (15) est maintenue en contact glissant en une position axialement intérieure par rapport à la position à laquelle la partie circonférencielle radialement interne (151) de l'élément d'étanchéité externe (15) est fixée à la bague de roulement interne (11).

3. Palier selon la revendication 1, caractérisé en ce qu'entre les zones de contact de la bague de roulement externe (12) avec respectivement la partie circonférencielle radialement externe (161) de l'élément d'étanchéité interne (16) et la partie circonférencielle radialement externe (152) de l'élément d'étancheité externe (15), la bague de roulement externe (12) comporte une partie de surface tournée axialement vers l'extérieur et, entre les zones de contact de la bague de roulement interne (11) avec respectivement la partie circonférencielle radialement interne (162) de l'élément d'étanchéité interne (16) et la partie circonférencielle radialement interne (151) de l'élément d'étanchéité externe (15), la bague de roulement interne (11) comporte une partie de surface tournée axialement vers l'extérieur.

4. Palier selon la revendication 1, caractérisé en ce qu'entre les zones de contact de la bague de roulement externe (12) avec respectivement la partie circonférencielle radialement externe (161) de l'élément d'étancheité interne (16) et la partie circonférencielle radialement externe (152) de l'élément d'étancheité externe (15), la bague de roulement externe (12) comporte un prolongement (19) qui s'étend radialement vers l'intérieur.

Fig. 1

*Fig. 2*

## Fig. 3  PRIOR ART